# EUROPÄISCHE PATENTSCHRIFT

(11) **EP 2 576 401 B1**
(45) Veröffentlichungstag und Bekanntmachung des Hinweises auf die Patenterteilung: **12.03.2014**
(21) Anmeldenummer: 11721787.7
(22) Anmeldetag: 30.05.2011
(51) Int. Cl.: B65G 1/137

(54) **VERFAHREN ZUM KOMMISSIONIEREN UND KOMMISSIONIERSYSTEM**
METHOD AND SYSTEM FOR PICKING ARTICLES
PROCEDE ET SYSTÈME DE PRÉPARATION DE COMMANDES

(30) Priorität: 01.06.2010 AT 8982010
(43) Veröffentlichungstag der Anmeldung: 10.04.2013
(73) Patentinhaber: Knapp AG, 8075 Hart bei Graz (AT)
(72) Erfinder: MATHI, Franz, A-8200 Gleisdorf (AT); ULLER, Klaus, A-8330 Feldbach (AT)
(74) Vertreter: Röggla, Harald
(86) Internationale Anmeldenummer: PCT/EP2011/058789
(87) Internationale Veröffentlichungsnummer: WO 2011/151275

(56) Entgegenhaltungen:
- EP-A1- 0 213 360
- EP-A1- 1 099 652
- EP-A1- 2 186 754
- EP-A2- 1 452 462
- WO-A1-2010/017873
- WO-A1-2010/022832
- WO-A2-2009/121090
- AT-B9- 412 153
- DE-A1- 19 719 651
- DE-U1- 29 724 039

## Beschreibung

Die Erfindung betrifft ein Verfahren zum Kommissionieren von Produkten in einer Kommissionieranlage mit zumindest einem Regal zum Lagern der Produkte und einem zugeordnetem Lagertransportsystem zum Aus- und Einlagern der Produkte und zur Übergabe ausgelagerter Produkte an ein Transportsystem, mit der ausgelagerte Produkte zu einem Ware-zu-Kommissionierer-Kommissionierplatz transportiert werden, an dem die in einem Kommissionierauftrag festgelegte Stückzahl der ausgelagerten Produkte in eine Auftragstransporteinheit je Kommissionierauftrag manuell, beziehungsweise automatisch mittels Roboter, kommissioniert werden, wobei dem Kommissionierauftrag entsprechende Produktarten ausgelagert, an dem Ware-zu-Kommissionierer-Kommissionieiplatz nacheinander kommissioniert und verbliebene Produkte der Produktart über das Transportsystem wieder in dem Regal eingelagert werden.

Die Erfindung betrifft weiters eine Kommissionieranlage zum Kommissionieren von Produkten, wobei die Kommissionieranlage zumindest ein Regal zum Lagern der Produkte und ein dem Regal zugeordnetes Lagertransportsystem zum Aus- und Einlagern der Produkte und zur Übergabe ausgelagerter Produkte an ein Transportsystem aufweist und ein Lagerverwaltungsrechner zum Steuern der Kommissionieranlage vorgesehen ist, und wobei ein Ware-zu-Kommissionierer-Kommissionierplatz vorgesehen ist, an dem die in einem Kommissionierauftrag festgelegte Stückzahl der ausgelagerten Produkte in eine Auftragstransporteinheit je Kommissionierauftrag kommissionierbar sind, wobei dem Kommissionierauftrag entsprechend Produktarten von dem Lagertransportsystem auslagerbar, an dem Ware-zu-Kommissionierer-Kommissionierplatz nacheinander kommissionierbar und nach dem Kommissionieren verbliebene Produkte der Produktart über das Transportsystem wieder in dem Regal einlagerbar sind.

So ein Verfahren und so eine Kommissionieranlage sind beispielsweise aus dem Dokument DE 101 36 354 A1 bekannt. Das bekannte System weist mehrere Hochregale eines Hochregallagers auf, zwischen denen je eine Fahrgasse gebildet ist, in denen je ein Lagertransportsystem vorgesehen ist, um in dem Hochregallager gelagerte Produkte ein-oder auszulagern. Jedes der Lagertransportsysteme weist je Regalebene ein Ebenenbediengerät auf, mit dem auszulagernde Produkte von Lagerplätzen abgeholt und an einen Lift des Transportsystems abgegeben werden. Mit Förderbändern des Transportsystems werden ausgelagerte Produkte an den Ware-zu-Kommissionierer-Kommissionieiplatz befördert, an dem eine Bedienperson die für einen Kommissionierauftrag vorgesehene Anzahl der Produktart des ausgelagerten Produktes nimmt und in einen Auftragsbehälter bzw. eine Auftragstransporteinheit des Kommissionierauftrags legt. Ein Lagerverwaltungsrechner der Kommissionieranlage steuert die Lagertransportsysteme und das Transportsystem so an, dass alle für einen Kommissionierauftrag zu kommissionierenden Produkte nacheinander aus dem Hochregallager ausgelagert und zu dem Ware-zu-Kommissionierer-Kommissionierplatz transportiert werden. Die Bedienperson muss somit nur die jeweils an einem Bildschirm oder durch Lichtzeichen angezeigte Stückzahl der Produktart von den ausgelagerten Produkten entnehmen und in den Auftragsbehälter A legen. Nach dem Kommissionieren noch verbliebene ausgelagerte Produkte werden von dem Lagerverwaltungsrechner gesteuert wiederum in das Hochregallager eingelagert.

Bei dem bekannten Verfahren zum Kommissionieren und der bekannten Kommissionieranlage hat sich erwiesen, dass diese Art des Ware-zu-Kommissionierer-Kommissionierens für bestimmte Kommissionieraufträge sehr zufrieden stellend anwendbar ist. Als Nachteil hat sich aber erwiesen, dass für bestimmte Produktarten, beziehungsweise bei bestimmten Produkteigenschaften (z.B. Umschlagshäufigkeit, Produktgeometrie), oder zum Erzielen hoher Kommissionierdurchsatzleistungen für bestimmte Kommissionieraufträge oder Teile bestimmter Kommissionieraufträge besser geeignete Kommissionierarten als das Ware-zu-Kommissionierer-Kommissionieren angewendet werden könnten. So ist zum Kommissionieren von beispielsweise Arzneimitteln das Kommissionieren mit einer Zentralbandtechnik erfolgreich im Einsatz. Bei der Zentralbandtechnik ist gemäß dem Stand der Technik ein gänzlich anderes Lagerungssystem vorgesehen, weshalb bei bekannten Kommissionieranlagen bereits unmittelbar nach der Anlieferung der Produkte durch den LKW oder die Bahn entschieden werden muss, wie die Produkte letztendlich kommissioniert werden sollen, um die geeignete Lagerungsart in der Kommissionieranlage festzulegen.

Es ist daher Aufgabe der vorliegenden Erfindung, ein Verfahren zum Kommissionieren von Produkten und eine Kommissionieranlage zu schaffen, bei der größtmögliche Flexibilität bezüglich der Art, wie die Produkte kommissioniert werden sollen, und der je Kommissionierauftrag erforderlichen Kommissionierdurchsatzleistung sowie der Lagerkosten und Kommissionierkosten zu erhalten.

Erfindungsgemäß wird diese Aufgabe bei einem Verfahren zum Kommissionieren dadurch gelöst, dass das Lagertransportsystem ausgelagerte Produkte über zumindest einen Durchlaufkanal an einen Zwischenlagerplatz eines Zentralbandtechnik-Kommissionieiplatzes übergibt, von dem ausgelagerte Produkte manuell, beziehungsweise automatisch mittels Roboter, einer Zentralbandtechnik zum Kommissionieren auf einem Zentralband der Zentralbandtechnik zugeführt werden, und dass unabhängig davon, ob ein Produkt an dem Ware-zu-Kommissionierer-Kommissionierplatz oder an dem Zentralbandtechnik-Kommissionierplatzes kommissioniert werden soll, das Produkt aus demselben Lagerplatz des Regals ausgelagert wird.

Erfindungsgemäß wird diese Aufgabe bei einer Kommissionieranlage dadurch gelöst, dass das Regal zumindest einen Durchlaufkanal und Zwischenlagerplatz eines an der dem Lagertransportsystem gegenüberliegenden Seite des Regals vorgesehenen Zentralbandtechnik-Kommissionierplatzes der Kommissionieranlage aufweist und dass das Lagertransportsystem dazu ausgebildet ist ausgelagerte Produkte über den Durchlaufkanal an den Zwischenlagerplatz zu übergeben, an dem ausgelagerte Produkte einer Zentralbandtechnik der Kommissionieranlage zum Kommissionieren auf einem Zentralband der Zentralbandtechnik zuführbar sind, und dass das Lagertransportsystem unabhängig davon, ob ein Produkt an dem Ware-zu-Kommissionierer-Kommissionierplatz oder an dem Zentralbandtechnik-Kommissionierplatzes kommissioniert werden soll, zum Auslagern des Produkts aus demselben Lagerplatz des Regals ausgebildet ist.

Hierdurch ist erreicht, dass sämtliche in der Kommissionieranlage zu lagernden und zu kommissionierenden Produkte in das ein oder mehrere Regale aufweisende Hochregallager oder in ein Karusselllager eingelagert werden können, wobei vorteilhafterweise noch keine Entscheidung getroffen werden muss, wie die eingelagerten Produkte später kommissioniert werden sollen. Die eingelagerten Produkte können von den jeweiligen Lagerplätzen in dem Hochregallager oder dem Karusselllager mit dem Lagertransportsystem und dem Transportsystem zu dem Ware-zu-Kommissionierer-Kommissionierplatz transportiert werden, wenn diese Art der Kommissionierung bei diesen Produkten und der geforderten Kommissionierdurchsatzleistung Sinn macht. Vorteilhafterweise können die in dem Hochregallager oder dem Karusselllager gelagerten Produkte aber von dem Lagertransportsystem auch unmittelbar über Durchlaufkanäle an Zwischenlagerplätze des Zentralbandtechnik-Kommissionierplatzes übergeben werden, von dem eine Bedienperson oder ein Roboter die ausgelagerten Produkte mittels der Zentralbandtechnik kommissionieren kann. Bei dieser Kommissionierart werden sehr hohe Kommissionierdurchsatzleistungen erzielt.

Als besonders vorteilhaft hat sich erwiesen, zusätzlich eine weitere Art von Kommissionierplatz, nämlich einen Kommissionierer-zu-Ware-Kommissionierplatz in der Kommissionieranlage vorzusehen. An diesem Kommissionierer-zu-Ware-Kommissionierplatz können sämtliche Produktarten und insbesondere so genannte schnelldrehende Produktarten besonders gut kommissioniert werden. Durch das Vorsehen von zumindest zwei beziehungsweise bis zu vier unterschiedlichen Arten von Kommissionierplätzen in einer Kommissionieranlage ist eine besonders große Flexibilität zur effektiven Auftragsabwicklung erhalten. Hierdurch ist vorteilhafterweise unter anderem erreicht, dass kein Umlagern von dem Lagersystem einer Kommissionierart zu dem Lagersystem einer anderen Kommissionierart nötig ist, wenn der Kommissionierauftrag oder ein Teil des Kommissionierauftrags mit einer anderen Kommissionierart abgearbeitet werden soll. Weiters ist durch das Vorsehen nur eines zentralen Lagersystems der Vorteil erhalten, dass durch zeitnahe Umlagerung und kurze Wege von dem jeweiligen Lagerplatz in dem Regal zu dem Kommissionierplatz und wieder retour und durch einheitliche Transporteinheiten für die Produkte eine hohe Produktverfügbarkeit gegeben ist und Kosten eingespart werden.

Die weiteren Ausbildungen und Vorteile der erfindungsgemäßen Kommissionieranlage und des erfindungsgemäßen Verfahrens zum Kommissionieren sind im Folgenden anhand mehrerer in den Figuren dargestellten Ausführungsbeispielen näher erläutert.
Figur 1 zeigt einen Ausschnitt einer Kommissionieranlage in einer ersten 3-D-Ansicht.
Figur 2 zeigt die Kommissionieranlage gemäß Figur 1 in einer Seitenansicht.
Figur 3 zeigt die Kommissionieranlage gemäß Figur 1 in einer Draufsicht.
Figur 4 zeigt die Kommissionieranlage gemäß Figur 1 in einer zweiten 3-D-Ansicht.
Figur 5 zeigt die gesamte Kommissionieranlage gemäß Figur 1 in einer Seitenansicht.
Figur 6 zeigt eine weitere Kommissionieranlage mit einem Karusselllager in einer Draufsicht.

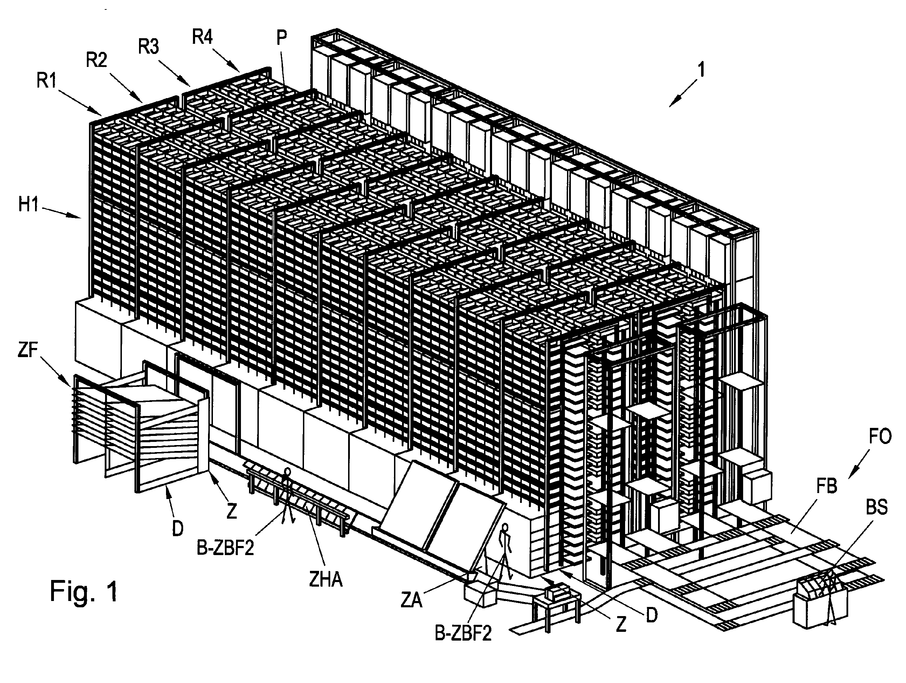

Figur 1 zeigt einen Ausschnitt einer Kommissionieranlage 1 zum Kommissionieren von Produkten P. Unter dem "Kommissionieren" versteht man das Zusammenstellen von der gewünschten Anzahl von Produkt P je gewünschter Produktart eines Kommissionierauftrages bzw. Bestellauftrages eines Kunden. Die die unterschiedlichen Produktarten werden per LKW oder Bahn in großer Stückzahl zu der Kommissionieranlage 1 angeliefert und in einem Hochregallager H1 eingelagert. In Figur 1 sind vier Hochregale R1, R2, R3 und R4 des Hochregallagers H1 dargestellt, wobei jedes Hochregal 23 Ebenen übereinander aufweist und etwa 50 Lagerplätze je Hochregal R1 bis R4 in Längsrichtung des Hochregallagers H1 in Figur 1 dargestellt sind. Das in Figur 1 dargestellte Hochregallager H1 weist weiters eine so genannte doppelt tiefe Lagerung auf, bei der jedes Regal R1 bis R4 durch ein Doppelregal gebildet ist, in dem zwei Lagerplätze hintereinander angeordnet vorgesehen sind. Eine erfindungsgemäße Kommissionieranlage kann aber ebenso eine nur einfach tiefe Lagerung oder auch eine mehr als doppelt tiefe Lagerung aufweisen.

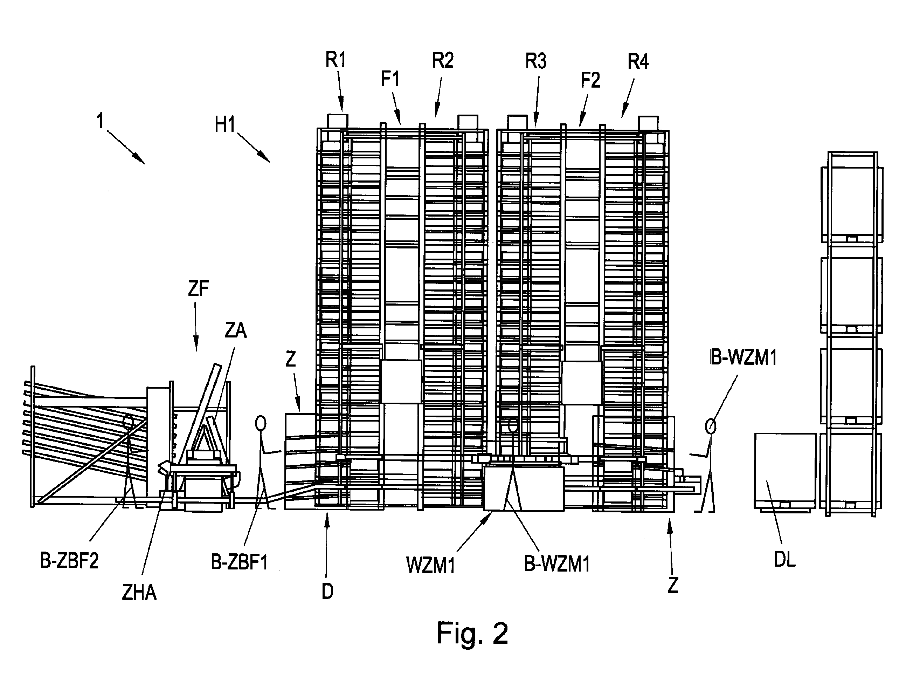

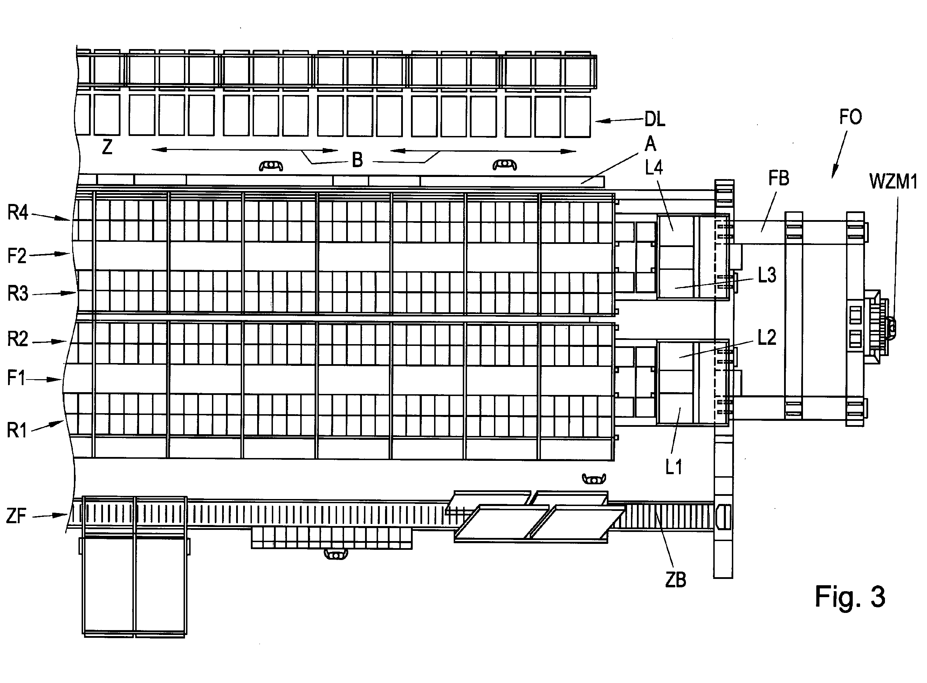

Figur 2 zeigt die Kommissionieranlage 1 gemäß Figur 1 in einer Seitenansicht und Figur 3 in einer Draufsicht. In Figur 2 ist eine erste Fahrgasse F1, die zwischen den zwei Hochregalen R1 und R2 gebildet ist, und eine zweite Fahrgasse F2, die zwischen den zwei Hochregalen R3 und R4 gebildet ist, dargestellt. In den Fahrgassen F1 und F2 sind, in den Figuren nicht näher dargestellte Lagertransportsysteme vorgesehen, die je Regalebene ein Ebenenbediengerät aufweisen. Die Produkte P je Produktart sind in den einzelnen Lagerplätzen auf Lagertransporteinheiten gelagert, die von dem Ebenenbediengerät samt darauf befindlichen Produkten P aus dem Lagerplatz ausgelagert und an ein Transportsystem FO übergeben werden. Das Transportsystem FO ist durch einen Lift L1 bis L4 je Hochregal R1 bis R4 und durch Förderbänder FB gebildet. Ein solches Lagertransportsystem samt Ebenenbediengeräten ist beispielsweise in der DE 101 36 354 A1 offenbart, weshalb hierauf in diesen Ausführungsbeispielen nicht näher eingegangen ist.

Ein in den Figuren nicht dargestellter Lagerverwaltungsrechner ist dazu vorgesehen, jeder der zu der Kommissionieranlage 1 angelieferten Produktart einen oder mehrere geeignete Lagerplätze in dem Hochregallager H1 zuzuweisen und die Produkte P über das Transportsystem FO und das Lagertransportsystem auf den oder die zugewiesenen Lagerplätze einzulagern. Weiters gehen bei dem Lagerverwaltungsrechner Kommissionieraufträge ein, die entsprechend einem nachfolgend beschriebenen Verfahren zum Kommissionieren von Produkten P abgearbeitet werden.

Die Kommissionieranlage 1 weist nunmehr weiters einen so genannten Ware-zu-Kommissionierer-Kommissionierplatz WZM1 auf, der sich dadurch auszeichnet, dass die zu kommissionierenden Produkte P aus dem Hochregallager H1 von dem Lagerverwaltungsrechner gesteuert ausgelagert und zu dem "Mann" bzw. der Bedienperson B-WZM1 transportiert werden. An einem Bildschirm BS kann die Bedienperson B-WZM1 ablesen, welche Stückzahl von Produkten P der jeweiligen Produktart kommissioniert werden sollen und legt diese Stückzahl der Produkte P in einem diesem Kommissionierauftrag zugewiesenen Auftragsbehälter A ab, der eine Auftragstransporteinheit bildet. Die auf der Lagertransporteinheit nach dem Kommissionieren verbliebenen Produkte P werden hierauf von dem Lagerverwaltungsrechner mittels des Transportsystems FO und dem Lagertransportsystem wieder auf den Lagerplatz in das Hochregallager H1 transportiert und dort gelagert.

Ebenso könnten Lichtzeichen anstatt des Bildschirms BS die Anzahl der zu kommissionierenden Produkte anzeigen oder es könnte durch Sprachausgabe oder mit Hilfe einer 3d-Brille die Bedienperson entsprechend informiert werden. Besonders vorteilhaft ist es einen von dem Lagerverwaltungsrechner gesteuerten Roboter beziehungsweise Roboterarm anstatt der Bedienperson vorzusehen, welcher Roboter die zu kommissionierenden Produkte P in der richtigen Anzahl an dem Ware-zu-Kommissionierer-Kommissionierplatz entnimmt und in den Auftragsbehälter A legt. Die Auftragsbehälter A können als Karton oder anderen Behältnissen gebildet sein.

Die Kommissionieranlage 1 weist weiters in den untersten fünf Regalebenen des Regals R1 keine Lagerplätze sondern einen Durchlaufkanal D je Regallageiplatz auf, wobei das Ende der Durchlaufkanäle D Zwischenlagerplätze Z für Fachböden bildet. In diesen fünf Regalebenen ist das Regal R1 auf der zu der Fahrgasse F1 gegenüberliegenden Seite verbreitert, um ausreichend Platz für die Zwischenlagerplätze Z ausgelagerter Produkte P zu bieten. Die Kommissionieranlage 1 weist nunmehr weiters eine Zentralbandtechnik ZF auf, die ein Zentralband ZB und mehrere Zentralbandtechnik-Kommissionierplätze aufweist. In den Figuren sind allerdings nur ein Zentralbandtechnik-Kommissionierplatz ZBF1 mit einem Zentralbandautomaten ZA und ein Zentralbandtechnik-Kommissionierplatz ZBF2 mit einem Zentralbandhalbautomaten ZHA dargestellt. Die Durchlaufkanäle D bilden hierbei die unmittelbare Anbindung des Hochregallagers H1 an den Zentralbandtechnik ZF.

Eine Bedienperson B-ZBF1 für den Zentralbandtechnik-Kommissionierplatz ZBF1 holt Produkte P aus den Zwischenlagerplätzen Z und bestückt den Zentralbandautomaten ZA. Hierbei kommissioniert die Bedienperson B-ZBF1 keine Kommissionieraufträge, sonder füllt nur die von dem Zentralbandautomaten ZA kommissionierten Produktarten in dem Zentralbandautomaten ZA nach. Der Zentralbandautomat ZA kommissioniert von dem Lagerverwaltungsrechner gesteuert automatisch auf das Zentralband ZB, worauf bei der Erläuterung des Verfahrens zum Kommissionieren von Produkten P näher eingegangen ist. Eine Bedienperson B-ZBF2 für den Zentralbandtechnik-Kommissionierplatz ZBF2 holt Produkte P aus den Zwischenlagerplätzen Z und schlichtet sie in den Zentralbandhalbautomaten ZHA entsprechend einem Kommissionierauftrag ein. Der Zentralbandhalbautomat ZA kommissioniert von dem Lagerverwaltungsrechner gesteuert zu einem bestimmten Zeitpunkt die in den Zentralbandhalbautomaten ZHA gelegten Produkte P auf das Zentralband ZB, worauf bei der Erläuterung des Verfahrens zum Kommissionieren von Produkten P näher eingegangen ist.

Es kann erwähnt werden, dass auch nur die unterste Regalebene oder aber beispielsweise auch dem untersten zehn Regalebenen Durchlaufkanälen und Zwischenlagerplätzen vorgesehen sein könnten.

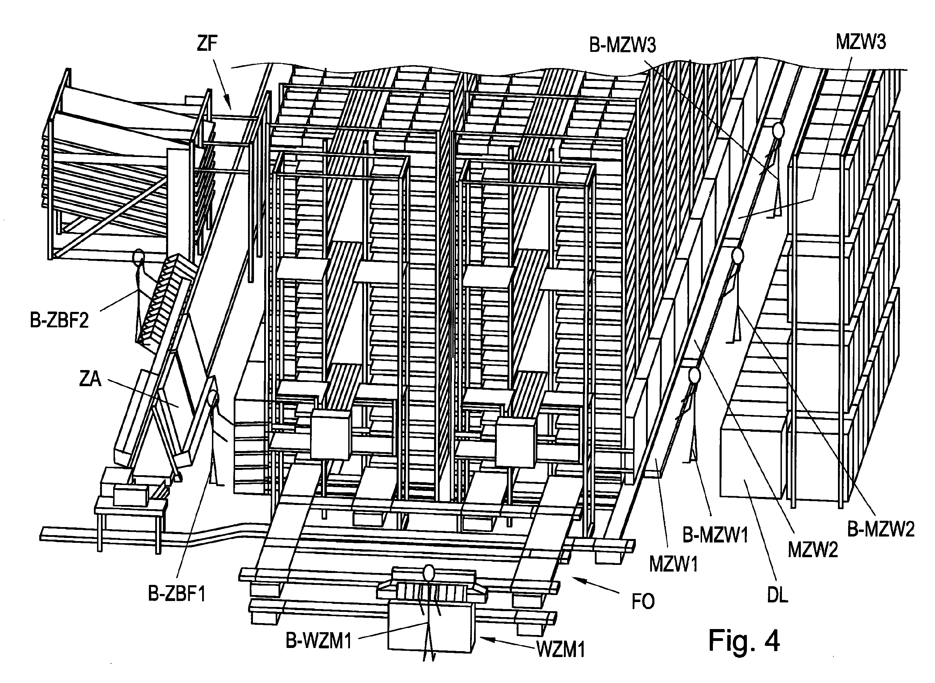

Figur 4 zeigt die Kommissionieranlage 1 gemäß Figur 1 in einer zweiten 3-D-Ansicht, wobei an der Außenseite des Hochregals R4 vorgesehene Kommissionierer-zu-Ware-Kommissionierplätze MZW1 bis MZW3 dargestellt sind. Ein Kommissionierer-zu-Ware-Kommissionierplatz zeichnet sich dadurch aus, dass von je eine Bedienperson B-MZW1 bis B-MZW3 aus dem ihr zugewiesenen Bereich B Produkte P aus Zwischenlagerplätzen Z des Kommissionierer-zu-Ware-Kommissionierplatzes oder aus Dauerlagerplätzen DL entnimmt und entsprechend dem jeweiligen Kommissionierauftrag in einen Auftragsbehälter A legt. Der Mann bzw. die Bedienperson B-MZW1 bis B-MZW3 muss hierbei kürzere Wege im Bereich B zurücklegen und zu den zu kommissionierenden Produkten P gehen, um diese zu holen, worauf bei der Erläuterung des Verfahrens zum Kommissionieren von Produkten P näher eingegangen ist.

Besonders vorteilhaft ist es auch bei diesem Kommissionierplatz einen von dem Lagerverwaltungsrechner gesteuerten Roboter beziehungsweise Roboterarm anstatt der Bedienperson vorzusehen, welcher Roboter die zu kommissionierenden Produkte P in der richtigen Anzahl an dem Kommissionierer-zu-Ware-Kommissionierplatz entnimmt und in den Auftragsbehälter A legt. Beispielsweise könnte ein so genannter ABB "Spinnen" Roboters verwendet werden.

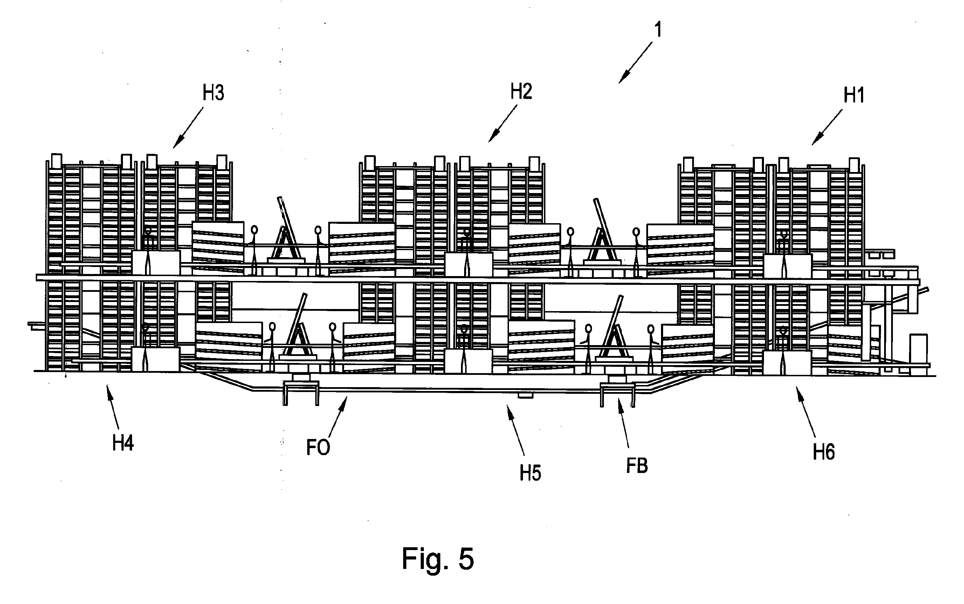

Figur 5 zeigt die gesamte Kommissionieranlage 1 gemäß Figur 1 in einer Seitenansicht, bei der sechs Hochregallager H1 bis H6 in zwei Ebenen übereinander angeordnet sind. Das Transportsystem FO verbindet die einzelnen Hochregallager H1 bis H6 und Kommissionierplätze miteinander, wobei Teile des Transportsystems FO unterirdisch geführt sind. Eine solche Kommissionieranlage 1 kann aus beliebig vielen Hochregalen und zugeordneten Kommissionierplätzen modular in mehreren Ebenen übereinander und in beliebig vielen Modulen nebeneinander mit einer beliebigen Länge der Hochregale zusammengesetzt werden. Dieser modulare Aufbau ermöglicht somit größtmögliche Flexibilität sowohl bei der Größe der Kommissionieranlage 1 als auch bei der für den jeweiligen Kommissionierauftrag zu wählenden Art die Produkte zu kommissionieren.

Im Folgenden ist nun das Verfahren zum Kommissionieren von Produkten P in der Kommissionieranlage 1 anhand von einzelnen Beispielen näher erläutert. Gemäß einem ersten Ausführungsbeispiel sei angenommen, dass ein LKW eine Ladung mit unterschiedlichen Produktarten, gemäß dem Beispiel Arzneimitteln, angeliefert hat. Die Arten unterschiedlicher Arzneimittel werden in die Datenbank des Lagerverwaltungsrechners eingepflegt oder sind bereits durch den Lieferanten elektronisch übermittelt worden. Der Lagerverwaltungsrechner verwaltet eine Datenbank, in der zu jedem Lagerplatz in den Hochregallagern H1 bis H6 angegeben ist, welche Produktart und Stückzahl der Produkte P auf dem Lagerplatz gelagert sind. Der Lagerverwaltungsrechner ist nunmehr dazu ausgebildet jeder einzulagernden Produktart beziehungsweise jedem einzulagernden Produkt P einen Lagerplatz zuzuweisen, der im Hinblick darauf, wie diese Produktart (z.B. Produktform) üblicherweise oder am Besten kommissioniert werden kann, festgelegt wird, um Ein- und Auslagerungswege beziehungsweise Ein- und Auslagerungszeiten des Lagertransportsystemes möglichst gering zu halten. Auch kann es einen Unterschied machen, ob eine Produktart angeliefert und neu eingelagert oder als Retoure in die Regale erneut eingelagert wird. Wenn also eine Produktart, wie beispielsweise eine Schachtel Kopfwehtabletten, am effizientesten und folglich auch am öftesten mit der Zentralbandtechnik ZF kommissioniert wird, dann weist der Lagerverwaltungsrechner dieser Produktart einen Lagerplatz im Regal oder Hochregal R1 oder R2 an der Fahrgasse F1 an. Hierdurch ist der Vorteil gegeben, dass, wenn die Kopfwehtabletten in dem Zentralbandautomaten ZA ausgehen und nachgeschlichtet werden müssen ein relativ kurzer Weg von dem Lagertransportsystem zurückgelegt werden muss, um die Lagertransporteinheit mit z.B. 1.000 Schachteln Kopfwehtabletten in den Durchlaufkanal D und von diesem in den Zwischenlagerplatz Z des Zentralbandtechnik-Kommissionierplatzes ZBF1 zu befördern. Ebenso beziehungsweise zusätzlich könnte der Lagerverwaltungsrechner den Lagerplatz für die Kopfwehtabletten dahingehend festlegen, wie oft die Kopfwehtabletten voraussichtlich kommissioniert werden, also wie groß die Auslagerfrequenz für diese Produktart ist. Öfter auszulagernde Produktarten könnten in unteren Regalebenen und näher an den Kommissionierplätzen in Lagerplätze des Hochregallagers H1 eingelagert werden.

Das Nachfüllen des Zentralbandautomaten ZA würde gemäß obigem Beispiel so abgewickelt werden, dass der Zentralbandautomat ZA an den Lagerverwaltungsrechner die Information übermitteln, dass die Schachteln Kopfwehtabletten in dem Zentralbandautomaten ZA ausgehen. Hierauf würde der Lagerverwaltungsrechner das Lagertransportsystem dahingehend ansteuern, dass die Lagertransporteinheit mit den Kopfwehtabletten über den Durchlaufkanal D in den Zwischenlagerplatz Z gelangen. Die Bedienperson B-ZBF1 würde einen Auftrag an dem Bildschirm dargestellt erhalten, dass die Schachteln Kopfwehtabletten von dem Zwischenlagerplatz Z in den Zentralbandautomaten ZA eingeschlichtet werden sollen. Entweder es werden alle auf der Lagertransporteinheit befindlichen Schachteln Kopfwehtabletten in den Zentralbandautomaten ZA eingeschlichtet oder die restlichen auf der Lagertransporteinheit verbliebenen werden wieder als Retoure von dem Lagerverwaltungsrechner gesteuert zurück auf den Lagerplatz transportiert werden. Ebenso könnte die Lagertransporteinheit mit den restlichen Schachteln Kopfwehtabletten für einen der folgenden Kommissionieraufträge in dem Zwischenlagerplatz Z gelagert beleiben.

Das Kommissionieren eines Kommissionierauftrags mit der Zentralbandtechnik ZF wird so abgewickelt, dass ein Kundenauftrag für eine Apotheke beziehungsweise ein Kommissionierauftrag neun Schachteln Kopfwehtabletten und drei Schachteln Salbe aufweist. Dieser Kommissionierauftrag wird dem Lagerverwaltungsrechner zugeführt und der Lagerverwaltungsrechner legt fest, dass sich diese beiden Produktarten im Zentralbandautomaten ZA befinden und daher sehr leicht und effizient dort kommissioniert werden können. Der Lagerverwaltungsrechner legt daher eine Fläche auf dem sich ständig mit beispielsweise ca. einem Meter pro Sekunde bewegenden Zentralband ZB virtuell fest, auf die dieser Kommissionierauftrag kommissioniert werden wird. Sobald diese virtuelle Fläche unter dem Zentralbandautomaten ZA bei der Ausgabe der Kopfwehtabletten ist kommissioniert der Zentralbandautomat ZA, gesteuert durch den Lagerverwaltungsrechner, neun Schachteln der Kopfwehtabletten auf das Zentralband ZB. Sobald dann diese virtuelle Fläche des Kommissionierauftrages, auf der bereits die neuen Schachteln Kopfwehtabletten liegen, bei der Ausgabe der Schachteln mit Salbe vorbeikommt, kommissioniert der Zentralbandautomat ZA die drei Schachteln Salbe dazu, wodurch der Kommissionierauftrag fertig kommissioniert ist. Am Ende des Zentralbandes werden die kommissionierten Schachteln in einen Auftragsbehälter A für diesen Kommissionierauftrag eingebracht und von dort mit dem Transportsystem versandbereit gemacht oder zur Abarbeitung eines weiteren Teil-Kommissionierauftrags an einen der anderen Kommissionierplätze der Kommissionieranlage 1 transportiert. Hierdurch ist der Vorteil erhalten, dass mit der Kommissionieranlage 1 die Produktart kleiner Schachteln für den medizinischen - insbesondere den Apothekenbedarf - flexibel und effizient mit dem Zentralbandautomaten ZA der Zentralbandtechnik ZF kommissioniert wurden.

Gemäß einem weiteren Ausführungsbeispiel sei angenommen, dass fünf sehr selten bestellte Schachteln Kräutertinktur und zwei sehr selten bestellte Schachteln Nasentropfen und eine Schachtel Kopfwehtabletten bestellt wurden. Der Lagerverwaltungsrechner steuert das Lagertransportsystem und das Transportsystem an, die Lagertransporteinheit mit den Schachteln Kräutertinktur und mit den Schachteln Nasentropfen aus dem Hochregal R1 und R2 zu holen und über den Durchlaufkanal D in je einen der Zwischenlagerplatz Z bei dem Zentralbandtechnik-Kommissionierplatz ZBF2 mit dem Zentralbandhalbautomaten ZHA zu transportieren. Die Bedienperson B-ZBF2 nimmt hierauf fünf Schachteln Kräutertinktur und zwei Schachteln Nasentropfen und legt diese in den Zentralbandhalbautomaten ZHA und bestätigt den Kommissionierauftrag. Hierauf legt der Lagerverwaltungsrechner wiederum eine Fläche auf dem Zentralband ZB fest und kommissioniert auf diese Fläche sowohl die Schachtel Kopfwehtabletten aus dem Zentralbandautomaten ZA als die fünf Schachteln Kräutertinktur und die zwei Schachteln Nasentropfen. Hierdurch ist vorteilhafterweise wiederum eine besonders flexible Art erhalten Kommissionieraufträge mit der am effizientesten zur Verfügung stehenden Art zu Kommissionieren.

Gemäß einem weiteren Ausführungsbeispiel sollen je eine bestimmte Stückzahl von drei unterschiedlichen Produktarten kommissioniert werden, die am effizientesten mit der Ware-zu-Kommissionierer-Kommissionierung kommissioniert werden können. Vorteilhafterweise kann der Lagerverwaltungsrechner anhand des jeweiligen Kommissionierauftrags festlegen, wo welcher Teil kommissioniert werden soll und das Lagertransportsystem und das Transportsystem entsprechen ansteuern. In diesem Fall steuert der Lagerverwaltungsrechner das Lagertransportsystem und das Transportsystem an, die Fachböden mit den drei Produktarten in ausreichender Stückzahl aus dem Hochregallager H1 auszulagern und hintereinander an dem Ware-zu-Kommissionierer-Kommissionierplatz WZM1 bereitzustellen. Die Bedienperson B-WZM1 erhält an dem Bildschirm BS angezeigt, wie viel Stück welcher Produktart sie von der Lagertransporteinheit entnehmen und in den Auftragsbehälter A des Kommissionierauftrags legen soll. Auf den Fachböden verbliebene Produkte der Produktarten werden von dem Lagerverwaltungsrechner gesteuert wieder auf die ihnen zugewiesenen Lagerplätze eingelagert. Der mit den Produkten P des Kommissionierauftrags gefüllte Auftragsbehälter A wird über das Transportsystem FO zum Versandt oder zu einem der anderen Kommissionierplätze transportiert. Ebenso wäre es möglich und vorteilhaft, dass eine statisch aus dem Hochregallager H1 ausgelagerte Produktart neben dem Ware-zu-Kommissionierer-Kommissionierplatz WZM1 über längere Zeitbereiche zwischengelagert wird, beispielsweise, wenn der Lagerverwaltungsrechner anhand der in den nächsten Stunden und Tagen abzuarbeitenden Kommissionieraufträgen erkennt, dass diese Produktart sehr oft am Ware-zu-Kommissionierer-Kommissionierplatz WZM1 benötigt werden wird. Hierdurch kann Kapazität des Transportsystems FO und des Lagertransportsystems zum Ein- und Auslagern dieser Produktart eingespart werden.

Gemäß einem weiteren Ausführungsbeispiel sollen Produkte P kommissioniert werden, die in großen Kisten oder Schachteln auf Paletten von einem LKW zu der Kommissionieranlage 1 angeliefert werden. Diese Paletten werden von Gabelstaplern unmittelbar auf einen der Dauerlagerplätze DL befördert und dort gelagert. Weitere in dem Hochregallager H1 gelagerte Produktarten sollen ebenfalls für diesen Kunden in dem Kommissionierauftrag kommissioniert werden. Der Lagerverwaltungsrechner entscheidet sich anhand dieser Informationen dazu, diesen Kommissionierauftrag an dem Kommissionierer-zu-Ware-Kommissionierplatz MZW1 zu kommissionieren und steuert das Lagertransportsystem und das Transportsystem FO entsprechend an, die in dem Hochregal H1 gelagerten Produktarten des Kommissionierauftrags über je einen Durchlaufkanal D in je einen Zwischenlagerplatz Z je Produktart zu transportieren. Die in dem Kommissionierauftrag zu kommissionierenden Produktarten sind somit parallel während der in benachbarten Zwischenlagerplätzen Z vorrätig und können von dort entnommen werden. Somit sind alle an dem Kommissionierer-zu-Ware-Kommissionierplatz MZW1 zu kommissionierenden ausgelagerten Produkte P des Kommissionierauftrags während der Zeitdauer des Kommissionierens je Produktart in einem der Zwischenlagerplätze Z des Kommissionierer-zu-Ware-Kommissionierplatzes MZW1 zwischengelagerten und können aus diesen Zwischenlagerplätzen Z manuell oder auch von einem Roboter kommissioniert werden. Wenn dies manuell erfolgt, dann erhält die Bedienperson B-MZW1 einen Kommissionierauftrag und entnimmt die entsprechenden Stückzahlen der Produkte P aus den Zwischenlagerplätzen Z und dem Dauerlageiplatz DL in ihrem Bereich B und kommissioniert die Produkte P in einen Auftragsbehälter A des Kommissionierauftrags. Auch bei diesem Ausführungsbeispiel ist durch die flexible Möglichkeit für jeden Kommissionierauftrag die am besten geeignete Art der Kommissionierung festzulegen ein wesentlicher Vorteil erhalten.

Gemäß oben beschriebenen Ausführungsbeispielen wurde die Entscheidung darüber, welche Art oder welche Arten der Kommissionierung eines Kommissionierauftrages durch den Lagerverwaltungsrechner getroffen. Es kann erwähnt werden, dass diese Entscheidung auch von einer Bedienperson getroffen werden kann, die ihre Entscheidung, basierend auf mit dem Lagerverwaltungsrechner angezeigten Informationen über den Kommissionierauftrag, fällt und in den Lagerverwaltungsrechner eingibt.

Die Durchlaufkanäle D und Zwischenlagerplätze Z für die Zentralbandtechnik-Kommissionierplätze und die Kommissionierer-zu-Ware-Kommissionieiplätze sind vorteilhafterweise in den unteren Regalebenen der äußeren Hocheregale R1 und R4 des Hochregallagers H1 vorgesehen, damit die Bedienpersonen B-ZBF1 und B-MZW1 gut zu den Zwischenlagerplätzen Z gelangen, um Produkte entnehmen zu können. Je nach der Höhe der Zwischenlagerplätze können die unteren Regalebenen hierbei durch die untersten beispielsweise drei, fünf oder auch zwanzig Regalebenen des Regals gebildet sein.

Gemäß dem Ausführungsbeispiel in den Figuren 1 bis 5 ist das Lagertransportsystem durch je ein Ebenenbediengerät je Regalebene gebildet, was zum Erzielen einer hohen Kommissionierdurchsatzleistung vorteilhaft ist. Ebenso könnte das Lagertransportsystem aber durch einen in der Fahrgasse F1 und F2 fahrenden und in der Höhe verstellbares Regalbediengerät gebildet sein. Das Regalbediengerät könnte nur einen Mast über die gesamte Regalhöhe oder auch mehrere Mastgeräte übereinander aufweisen. Das Lagertransportsystem könnte weiters durch ein Karussell gebildet sein. Ebenso könnte das Transportsystem FO durch das Regalbediengerät gebildet sein, das fahrerlos aus der Fahrgasse fährt und die ausgelagerten Produkte P direkt zu einem der Kommissionierplätze befördert. Das Transportsystem könnte aber auch durch eine Palletten-Förderechnik oder Hängebahnen gebildet sein.

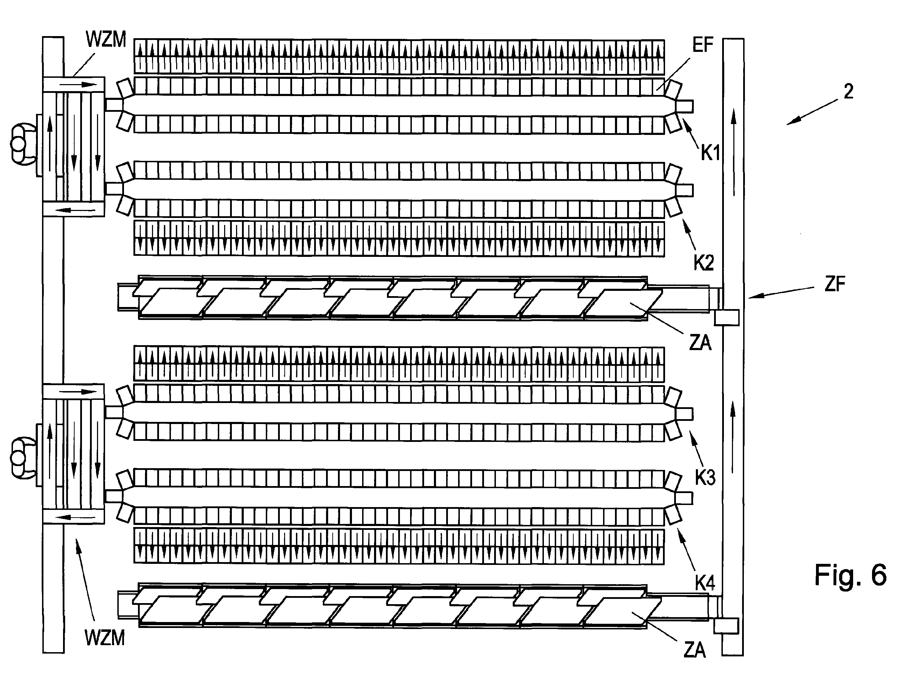

In Figur 6 ist eine zweite Ausführung einer erfindungsgemäßen Kommissionieranlage 2 dargestellt, bei der die Produkte P nicht in einem Hochregallager, sondern in einem Karusselllager K1 bis K4 gelagert werden. Die Produkte P werden auf einer Endlosfachbodenkette EF gelagert. Wenn ein bestimmtes Produkt P ausgelagert werden soll, dann wird die Endlosfachbodenkette EF so lange transportiert, bis der entsprechende Lagerplatz an dem Transportsystem, insbesondere an dem Lift, oder an einem Hebearm, der beispielsweise in dem mittleren Bereich des Karusselllagers positioniert ist, um die Lagertransporteinheit mit dem Produkt P zu einem der vorstehend beschriebenen Kommissionierplätze zu transportierten. Das Karusselllager kann ebenfalls in mehreren Ebenen übereinander als Hoch-Karusselllager ausgeführt sein.

Bei einer erfindungsgemäßen Kommissionieranlage befindet sich folglich zentral in der Mitte zumindest ein Regal, insbesondere aber ein Hochregallager oder Karusselllager in das eine große Anzahl an unterschiedlichen Produktarten eingelagert werden kann. An den Rändern des zentralen Lagers befinden sich unterschiedliche Arten von Kommissionierplätzen und je nach Kommissionierauftrag die geeignete Art der Kommissionierung auszuwählen oder die geeigneten Arten der Kommissionierung zu kombinieren, um den Kommissionierauftrag möglichst effizient und schnelle abarbeiten zu können.

Es kann erwähnt werden, dass das Kommissionieren an dem Ware-zu-Kommissionierer-Kommissionierplatz überwiegend mit Produkten erfolgt, die nacheinander von dem Transportsystem dem Ware-zu-Kommissionierer-Kommissionierplatz zugeführt werden, wobei die restlichen Produkte statisch oder zumindest über einen Zeitbereich von einigen Stunden oder mehreren Tagen vorübergehend an dem Ware-zu-Kommissionierer-Kommissionierplatz zwischengelagert sind.

Es kann erwähnt werden, dass eine Auftragstransporteinheit und eine Lagertransporteinheit als Kunststoffbehälter oder als Karton oder als Tray oder als Ladungsträger ausgebildet sein können. Weiters ist es möglich die Lagertransporteinheit auch gleich als Auftragstransporteinheit zu verwenden. Weiters kann erwähnt werden, dass Produkte P nicht auf Lagertransporteinheiten in den Regalen gelagert sein müssen sonder, dass die Produkte P beispielsweise auch direkt eingelagert werden könnten.

Es kann erwähnt werden, dass zum Transport ausgelagerter Produkte P zu den Durchlaufkanälen D des Zentralband-Kommissionierplatzes das Transportsystem vorteilhafterweise nicht belastet wird sondern die Produkte P direkt von dem Lagertransportsystem in die Durchlaufkanäle D übergeben werden.

Es kann erwähnt werden, dass die Produkte mittels Schwerkraft durch den Durchlaufkanal D in den Zwischenlagerplatz Z transportiert werden können, dass dies aber ebenfalls elektrisch, hydraulisch oder pneumatisch angetrieben erfolgen kann. Weiters kann anschließend an einen Durchlaufkanal D ein Zwischenlagerplatz Z oder es können auch mehrere Zwischenlagerplätze Z vorgesehen sein.

Es kann erwähnt werden, dass ein Kommissionierauftrag zur Gänze an einem Kommissionierplatz gemäß nur einer Kommissionierart durchgeführt werden kann, dass ein Kommissionierauftrag aber auch in ein, zwei oder mehrere Teil-Kommissionieraufträge aufgeteilt werden kann. In diesem Fall könnte beispielsweise ein Teil des Kommissionierauftrags bei dem Zentralbandtechnik-Kommissionierplatz und ein anderer Teil bei dem Ware-zu-Kommissionierer-Kommissionierplatz durchgeführt werden. Ebenso könnte ein Teil-Kommissionierauftrag bei dem Kommissionierer-zu-Ware-Kommissionierplatz und ein anderer Teil-Kommissionierauftrag mittels des Zentralbandhalbautomaten des Zentralbandautomaten-Kommissionierplatzes durchgeführt werden. Erfindungsgemäß können somit vorteilhafterweise beliebige der von der Kommissionieranlage unterstützten Kommissionierarten zur Kommissionierung verwendet werden, wobei unter anderem sowohl auf die Kommissionierdurchsatzleistung, aber auch auf die Lagerkosten und Kommissionierkosten geachtet wird. Die für einen Kommissionierauftrag gewählte Kommissionierart könnte sich beispielsweise auch abhängig von der Jahreszeit ändern. So könnten beispielsweise in der kalten Jahreszeit Produktarten, wie Kopfwehtabletten oder Nasentropfen, so stark nachgefragt sein, dass diese in den Zentralbandautomat des Zentralbandtechnik-Kommissionierplatzes aufgenommen werden, und in der warmen Jahreszeit effizienter an dem Ware-zu-Mann-Kommissionierplatz kommissioniert werden.

Um in dem Hochregal H1 alle möglichen Produktarten den Erfordernissen der Produkten P entsprechend zu lagern, könnte beispielsweise eines der Regale R als Kühlregal ausgebildet sein, um Tiefkühlware oder normale Kühlware frisch zu halten.

## Patentansprüche

1. Verfahren zum Kommissionieren von Produkten (P) in einer Kommissionieranlage (1; 2) mit zumindest einem Regal (R1 bis R4; K1 bis K4) zum Lagern der Produkte (P) und einem zugeordnetem Lagertransportsystem zum Aus- und Einlagern der Produkte (P) und zur Übergabe ausgelagerter Produkte (P) an ein Transportsystem (FO), mit der ausgelagerte Produkte (P) zu einem Ware-zu-Kommissionierer-Kommissionierplatz (WZM1) transportiert werden, an dem die in einem Kommissionierauftrag festgelegte Stückzahl der ausgelagerten Produkte (P) in eine Auftragstransporteinheit (A) je Kommissionierauftrag manuell, beziehungsweise automatisch mittels Roboter, kommissioniert werden, wobei dem Kommissionierauftrag entsprechende Produktarten ausgelagert, an dem Ware-zu-Kommissionierer-Kommissionierplatz (WZM1) nacheinander kommissioniert und verbliebene Produkte (P) der Produktart über das Transportsystem (FO) wieder in dem Regal (R1 bis R4; K1 bis K4) eingelagert werden, **dadurch gekennzeichnet, dass** das Lagertransportsystem ausgelagerte Produkte (P) weiters über zumindest einen Durchlaufkanal (D) an einen Zwischenlagerplatz (Z) eines Zentralbandtechnik-Kommissionierplatzes (ZBF1, ZBF2) übergibt, von dem ausgelagerte Produkte (P) manuell, beziehungsweise automatisch mittels Roboter, einer Zentralbandtechnik (ZF) zum Kommissionieren auf einem Zentralband (ZB) der Zentralbandtechnik (ZF) zugeführt werden und dass unabhängig davon, ob ein Produkt (P) an dem Ware-zu-Kommissionierer-Kommissionierplatz (WZM1) oder an dem Zentralbandtechnik-Kommissionierplatzes (ZBF1, ZBF2) kommissioniert werden soll, das Produkt (P) aus demselben Lagerplatz des Regals (R1 bis R4; K1 bis K4) ausgelagert wird.

2. Verfahren zum Kommissionieren nach Anspruch 1, **dadurch gekennzeichnet, dass** das Lagertransportsystem ausgelagerte Produkte (P) weiters über Durchlaufkanäle (D) an Zwischenlagerplätze (Z) eines Kommissionierer-zu-Ware-Kommissionielplatz (MZW1 bis MZW3) übergibt, wobei alle an dem Kommissionierer-zu-Ware-Kommissionierplatz (MZW1 bis MZW3) zu kommissionierenden ausgelagerten Produkte (P) eines Kommissionierauftrags während der Zeitdauer des Kommissionierens je Produktart in einem der Zwischenlagerplätze (Z) des Kommissionierer-zu-Ware-Kommissionierplatzes (MZW1 bis MZW3) zwischengelagerten und aus diesen Zwischenlagerplätzen (Z) manuell, beziehungsweise automatisch mittels Roboter, in eine Auftragstransporteinheit (A) des Kommissionierauftrags kommissioniert werden.

3. Verfahren zum Kommissionieren nach einem der vorherigen Ansprüche, **dadurch gekennzeichnet, dass** an dem Ware-zu-Kommissionierer-Kommissionierplatz (WZM1) auch Produkte (P) zumindest einer statisch ausgelagerten Produktart kommissioniert werden, die an dem Ware-zu-Kommissionierer-Kommissionierplatz (WZM1) über einen längeren Zeitbereich, insbesondere für die Zeitdauer des Kommissionierens mehrere Kommissionieraufträge zwischengelagert wird.

4. Verfahren zum Kommissionieren nach einem der vorherigen Ansprüche, **dadurch gekennzeichnet, dass** mit den ausgelagerten im Zwischenlagerplatz (Z) des Zentralbandtechnik-Kommissionierplatzes (ZBF1) befindlichen Produkten (P) ein Zentralbandautomat (ZA) des Zentralbandtechnik-Kommissionierplatzes (ZBF1) manuell, beziehungsweise automatisch mittels Roboter, befüllt wird, mit dem von einem Lagerverwaltungsrechner gesteuert jeder Kommissionierauftrag automatisch auf das Zentralband (ZB) kommissioniert wird, wobei am Ende des Zentralbandes (ZB) die kommissionierten Produkte (P) jedes Kommissionierauftrags je in eine Auftragstransporteinheit (A) eingebracht werden.

5. Verfahren zum Kommissionieren nach einem der vorherigen Ansprüche, **dadurch gekennzeichnet, dass** mit den ausgelagerten im Zwischenlagerplatz (Z) des Zentralbandtechnik-Kommissionierplatzes (ZBF2) befindlichen Produkten (P) ein Zentralbandhalbautomat (ZHA) des Zentralbandtechnik-Kommissionierplatzes (ZBF2) je Kommissionierauftrag manuell, beziehungsweise automatisch mittels Roboter, befüllt und anschließend auf das Zentralband (ZB) kommissioniert wird, wobei am Ende des Zentralbandes (ZB) die kommissionierten Produkte (P) jedes Kommissionierauftrags je in eine eigene Auftragstransporteinheit (A) eingebracht werden.

6. Verfahren zum Kommissionieren nach einem der vorherigen Ansprüche, **dadurch gekennzeichnet, dass** ein Lagerverwaltungsrechner der Kommissionieranlage (1; 2) jedem einzulagernden Produkt (P) abhängig von Produkteigenschaften und der für das Produkt (P) zu erwartenden Kommissionierart einen geeigneten Lagerplatz zuweist, um Ein- und Auslagerwege beziehungsweise Ein- und Auslagerzeiten des Lagertransportsystemes gering zu halten und die Kommissionierleistung zu erhöhen.

7. Verfahren zum Kommissionieren nach einem der vorherigen Ansprüche, **dadurch gekennzeichnet, dass** die Produkte (P) in einem Karusselllager (K1 bis K4) gelagert sind, in dem die Produkte (P) auf einer Endlosfachbodenkette (EF) geführt und ausgelagerte Produkte (P) mit dem Lagertransportsystem von der Endlosfachbodenkette (EF) entweder an das Transportsystem (FO) oder an einen der Durchlaufkanäle (D) übergeben werden.

8. Kommissionieranlage (1; 2) zum Kommissionieren von Produkten (P), wobei die Kommissionieranlage (1; 2) zumindest ein Regal (R1 bis R4; K1 bis K4) zum Lagern der Produkte (P) und ein dem Regal (R1 bis R4; K1 bis K4) zugeordnetes Lagertransportsystem zum Aus- und Einlagern der Produkte (P) und zur Übergabe ausgelagerter Produkte (P) an ein Transportsystem (FO) aufweist und ein Lagerverwaltungsrechner zum Steuern der Kommissionieranlage (1; 2) vorgesehen ist, und wobei ein Ware-zu-Kommissionierer-Kommissionierplatz (WZM1) vorgesehen ist, an dem die in einem Kommissionierauftrag festgelegte Stückzahl der ausgelagerten Produkte (P) in eine Auftragstransporteinheit (A) je Kommissionierauftrag kommissionierbar sind, wobei dem Kommissionierauftrag entsprechend Produktarten von dem Lagertransportsystem auslagerbar, an dem Ware-zu-Kommissionierer-Kommissionierplatz (WZM1) nacheinander kommissionierbar und nach dem Kommissionieren verbliebene Produkte (P) der Produktart über das Transportsystem (FO) wieder in dem Regal (R1 bis R4; K1 bis K4) einlagerbar sind, **dadurch gekennzeichnet, dass** das Regal (R1 bis R4; K1 bis K4) zumindest einen Durchlaufkanal (D) und Zwischenlagerplatz (Z) eines an der dem Lagertransportsystem gegenüberliegenden Seite des Regals (R1 bis R4; K1 bis K4) vorgesehenen Zentralbandtechnik-Kommissionierplatzes (ZBF1, ZBF2) der Kommissionieranlage (1; 2) aufweist und dass das Lagertransportsystem dazu ausgebildet ist ausgelagerte Produkte (P) über den Durchlaufkanal (D) an den Zwischenlagerplatz (Z) zu übergeben, an dem ausgelagerte Produkte (P) einer Zentralbandtechnik (ZF) der Kommissionieranlage (1; 2) zum Kommissionieren auf einem Zentralband (ZB) der Zentralbandtechnik (ZF) zuführbar sind, und dass das Lagertransportsystem unabhängig davon, ob ein Produkt (P) an dem Ware-zu-Kommissionierer-Kommissionierplatz (WZM1) oder an dem Zentralbandtechnik-Kommissionierplatzes (ZBF1, ZFB2) kommissioniert werden soll, zum Auslagern des Produkts (P) aus demselben Lagerplatz des Regals (R1 bis R4; K1 bis K4) ausgebildet ist.

9. Kommissionieranlage (1; 2) gemäß Anspruch 8, **dadurch gekennzeichnet, dass** das Lagertransportsystem dazu ausgebildet ist ausgelagerte Produkte (P) weiters über Durchlaufkanäle (D) an Zwischenlagerplätze (Z) eines an der dem Lagertransportsystem gegenüberliegenden Seite des Regals (R1 bis R4) vorgesehenen Kommissionierer-zu-Ware-Kommissionierplatzes (MZW1 bis MZW3) zu übergeben, wobei im Bereich (B) des Kommissionierer-zu-Ware-Kommissionierplatzes (MZW1 bis MZW3) für jede zu kommissionierende Produktart eines Kommissionierauftrags ein Zwischenlagerplatz (Z) vorgesehen ist, von denen die ausgelagerten Produkte (P) manuell in eine Auftragstransporteinheit (A) je Kommissionierauftrag kommissionierbar sind.

10. Kommissionieranlage (1; 2) nach einem der Ansprüche 8 oder 9, **dadurch gekennzeichnet, dass** die Durchlaufkanäle (D) und die Zwischenlagerplätze (Z) des Zentralbandtechnik-Kommissionierplatzes (ZBF1, ZBF2) beziehungsweise des Kommissionierer-zu-Ware-Kommissionierplatzes (MZW1 bis MZW3) in bodennahen unteren Regalebenen des zumindest einen Regals (R1 bis R4; K1 bis K4) vorgesehen sind.

11. Kommissionieranlage (1) nach Anspruch 10, **dadurch gekennzeichnet, dass** zumindest zwei Regale (R1, R4) parallel angeordnet ein Hochregallager (H1 bis H6) bilden, und dass die Durchlaufkanäle (D) und die Zwischenlagerplätze (Z) des Zentralbandtechnik-Kommissionierplatzes (ZBF1, ZBF2) in einem das Hochregallager (H1 bis H6) begrenzenden ersten äußeren Regal (R1) vorgesehen sind und dass die Durchlaufkanäle (D) und die Zwischenlagerplätze (Z) des Kommissionierer-zu-Ware-Kommissionieiplatzes (MZW1 bis MZW3) in einem zu dem ersten Regal (R1) gegenüberliegenden, das Hochregallager (H1 bis H6) begrenzenden zweiten äußeren Regal (R4) vorgesehen sind.

12. Kommissionieranlage (1) nach einem der Ansprüche 8 bis 11, **dadurch gekennzeichnet, dass** zumindest zwei Regale (R1 bis R4) mit je zumindest zwei Regalebenen eine Fahrgasse (F1, F2) bilden in der je Regalebene ein Ebenenbediengerät des Lagertransportsystems vorgesehen ist, das zum Ein- und Auslagern von Produkten (P) in die Lagerplätze der Regale (R1 bis R4) und zum Abgeben ausgelagerter Produkte (P) an einen Lift (L1 bis L4) des Transportsystems (FO) ausgebildet ist, der die ausgelagerten Produkte (P) auf eine Förderbandebene befördert.

13. Kommissionieranlage (1) nach einem der Ansprüche 8 bis 12, **dadurch gekennzeichnet, dass** an dem Ware-zu-Kommissionierer-Kommissionierplatz (WZM1) und/oder an dem Kommissionierer-zu-Ware-Kommissionierplatz (MZW1 bis MZW3) ein von dem Lagerverwaltungsrechner gesteuerter Roboter vorgesehen ist, der zum Kommissionieren ausgelagerter Produkte (P) ausgebildet ist und/oder, dass an dem Zentralbandtechnik-Kommissionierplatz (MZW1 bis MZW3) ein von dem Lagerverwaltungsrechner gesteuerter Roboter vorgesehen ist, der zum Kommissionieren ausgelagerter Produkte (P) in einen Zentralbandhalbautomaten (ZHA) und/oder zum Befüllen eines Zentralbandautomaten (ZA) mit ausgelagerten Produkten (P) ausgebildet ist.

## Claims

1. A method for the order picking of products (P) in an order picking facility (1; 2) having at least one rack (R1 to R4; K1 to K4) for storing the products (P) and one assigned warehouse transport system for collecting and storing the products (P) and for transferring the collected products (P) to a transport system (FO), by means of which the collected products (P) are transported to a good to picker order picking station (WZM1), where the quantity of the collected products (P) that is determined in a picking order is manually or automatically by a robot, respectively, picked into an order transport unit (A) per picking order, wherein product types corresponding to the picking order are collected, picked one after the other at the good to picker order picking station (WZM1) and wherein the remaining products (P) of the product type are re-stored in the rack (R1 to R4; K1 to K4) via the transport system (FO), **characterized in that** the warehouse transport system further transfers collected products (P) via at least one through-channel (D) to an intermediate storage site (Z) of a central belt technology order picking station (ZBF1, ZBF2), from where collected products (P) are manually or automatically by a robot, respectively, supplied to a central belt technology (ZF) for order picking on a central belt (ZB) of the central belt technology (ZF) and **in that**, irrespective of whether a product (P) is to be order picked at the good to picker order picking station (WZM1) or at the central belt technology order picking station (ZBF1, ZBF2), the product (P) is collected from the same storage site of the rack (R1 to R4; K1 to K4).

2. A method for the order picking according to claim 1, **characterized in that** the warehouse transport system further transfers collected products (P) via through-channels (D) to intermediate storage sites (Z) of a picker to good order picking station (MZW1 to MZW3), wherein all the collected products (P) of a picking order that are to be order picked at the picker to good order picking station (MZW1 to MZW3) during the time period of the order picking per product type are intermediately stored in one of the intermediate storage sites (Z) of the picker to good order picking station (MZW1 to MZW3) and from these intermediate storage sites (Z) order picked manually or automatically by a robot, respectively, into an order transport unit (A) of the picking order.

3. A method for the order picking according to any of the preceding claims, **characterized in that** at the good to picker order picking station (WZM1) also the products (P) of an at least statically collected product type are order picked, which is intermediately stored at the good to picker order picking station (WZM1) over a longer period of time, in particular for the time period of the order picking of several picking orders.

4. A method for the order picking according to any of the preceding claims, **characterized in that** a central belt machine (ZA) of the central belt technology order picking station (ZBF1) is filled with the collected products (P), which are situated in the intermediate storage site (Z) of the central belt technology order picking station (ZBF1), manually or automatically by a robot, respectively, by means of which each picking order is automatically order picked to the central belt (ZB), controlled by a warehouse administration computer, wherein at the end of the central belt (ZB) the order picked products (P) of each picking order are introduced each in an order transport unit (A).

5. A method for the order picking according to any of the preceding claims, **characterized in that** a central belt semi-machine (ZHA) of the central belt technology order picking station (ZBF2) is filled for each of the picking orders with the collected products (P), which are situated in the intermediate storage site (Z) of the central belt technology order picking station (ZBF2), manually or automatically by a robot, which are subsequently order picked to the central belt (ZB), wherein at the end of the central belt (ZB) the order picked products (P) of each picking order are introduced each in an own order transport unit (A).

6. A method for the order picking according to any of the preceding claims, **characterized in that** a warehouse administration computer of the order picking facility (1; 2) assigns an appropriate storage site to each of the products (P) to be stored, depending on product characteristics and the picking type to be expected for the product (P), in order to minimize the storing and collecting distances or storing and collecting times, respectively of the warehouse transport system and to increase the order picking performance.

7. A method for the order picking according to any of the preceding claims, **characterized in that** the products (P) are stored in a carrousel storage (K1 to K4), in which the products (P) are moved on a continuous shelf chain (EF) and wherein collected products (P) are transferred by the warehouse transport system from the continuous shelf chain (EF) either to the transport system (FO) or to any of the through-channels (D).

8. An order picking facility (1; 2) for the order picking of products (P), wherein the order picking facility (1; 2) has at least one rack (R1 to R4; K1 to K4) for storing the products (P) and a warehouse transport system that is assigned to the rack (R1 to R4; K1 to K4) for collecting and storing the products (P) and for transferring the collected products (P) to a transport system (FO) and wherein there is provided a warehouse administration computer for controlling the order picking facility (1; 2), and wherein there is provided a good to picker order picking station (WZM1), at which the quantity of the collected products (P) that is determined in a picking order may be order picked in one order transport unit (A) per each picking order, wherein product types corresponding to the picking order may be collected from the warehouse transport system, order picked at the good to picker order picking station (WZM1) one after the other and wherein the products (P) of the product type that are remaining after the order picking may be re-stored via the transport system (FO) in the rack (R1 to R4; K1 to K4), **characterized in that** the rack (R1 to R4; K1 to K4) has at least one through-channel (D) and an intermediate storage site (Z) of a central belt technology order picking station (ZBF1, ZBF2) of the order picking station (1; 2) that is provided at the side of the rack (R1 to R4; K1 to K4) opposite to the warehouse transport system and that the warehouse transport system is adapted to transfer collected products (P) via the through-channel (D) to the intermediate storage site (Z), at which collected products (P) of a central belt technology (ZF) of the order picking facility (1; 2) may be supplied for order picking on a central belt (ZB) of the central belt technology (ZF) and that the warehouse transport system, irrespective of whether a product (P) is to be order picked at the good to picker order picking station (WZM1) or at the central belt technology order picking station (ZBF1, ZBF2), is adapted to collect the product (P) from the same storage site of the rack (R1 to R4; K1 to K4).

9. An order picking facility (1; 2) according to claim 8, **characterized in that** the warehouse transport system is adapted to transfer collected products (P) further via through-channels (D) to intermediate storage sites (Z) of a picker to good order picking station (MZW1 to MZW3) that is provided at the side of the rack (R1 to R4) opposite to the warehouse transport system, wherein in the region (B) of the picker to good order picking station (MZW1 to MZW3) there is provided for each product type of a picking order to be order picked an intermediate storage site (Z), from where the collected products (P) may be manually order picked into one order transport unit (A) for each picking order.

10. An order picking facility (1; 2) according to any of claims 8 or 9, **characterized in that** the through-channels (D) and the intermediate storage sites (Z) of the central belt technology order picking station (ZBF1, ZBF2) or the picker to good order picking station (MZW1 to MZW3), respectively, are provided in lower rack levels of the at least one rack (R1 to R4; K1 to K4) that are close to the ground.

11. An order picking facility (1) according to claim 10, **characterized in that** at least two racks (R1, R4) that are arranged in parallel form a high-rack storage (H1 to H6) and that the through-channels (D) and the intermediate storage sites (Z) of the central belt technology order picking station (ZBF1, ZBF2) are provided in a first external rack (R1) delimiting the high-rack storage (H1 to H6) and that the through-channels (D) and the intermediate storage sites (Z) of the picker to good order picking station (MZW1 to MZW3) are provided in a second external rack (R4) situated opposite to the first rack (R1) and delimiting the high-rack storage (H1 to H6).

12. An order picking facility (1) according to any of claims 8 to 11, **characterized in that** least two racks (R1 to R4) with respectively at least two rack levels form a lane width (F1, F2), in which there is provided a level operating tool of the warehouse transport system for each rack level, which is configured to store and collect products (P) in the storage sites of the racks (R1 to R4) and to transfer collected products (P) to a lift (L1 to L4) of the transport system (FO), which conveys the collected products (P) onto a conveyor belt level.

13. An order picking facility (1) according to any of claims 8 to 12, **characterized in that** there is provided at the good to picker order picking station (WZM1) and/or at the picker to good order picking station (MZW1 to MZW3) a robot controlled by the warehouse administration computer, which is adapted to order pick collected products (P) and/or that there is provided at the central belt technology order picking station (MZW1 to MZW3) a robot controlled by the warehouse administration computer, which is adapted to order pick collected products (P) in a central belt semi-machine (ZHA) and/or to fill a central belt machine (ZA) with collected products (P).

## Revendications

1. Procédé de préparation de commandes de produits (P) dans une installation de préparation de commandes (1 ; 2) comprenant au moins un rayonnage (R1 à R4 ; K1 à K4) pour le stockage des produits (P) et un système de transport de stock associé pour sortir et entrer dans le stock les produits (P) et pour le transfert de produits (P) sortis du stock sur un système de transport (FO), à l'aide duquel les produits (P) sortis du stock sont transportés vers un poste de préparation des commandes des produits à préparer selon la commande (WZMI), où le nombre de pièces des produits (P) sortis du stock défini dans une commande à préparer est préparé selon la commande dans une unité de transport de commande (A), pour chaque commande à préparer, manuellement, respectivement automatiquement, au moyen d'un robot, les types de produits correspondants à la commande à préparer étant sortis du stock, préparés selon la commande les uns après les autres au poste de préparation des commandes des produits à préparer selon la commande (WZMI) et les produits (P) du type de produits restants étant de nouveau rentrés dans le stock dans le rayonnage (R1 à R4 ; K1 à K4) par l'intermédiaire du système de transport de stock (FO), **caractérisé en ce que** le système de transport de stock transmet plus loin des produits (P) sortis du stock par l'intermédiaire d'au moins un canal de traverse (D) vers un lieu de stockage transitoire (Z) du poste de préparation des commandes avec un système technique de bande centralisée (ZBF1, ZBF2), à partir duquel les produits (P) sortis du stock sont transportés manuellement, respectivement, automatiquement au moyen d'un robot, vers un système technique de bande centralisée (ZF) pour la préparation des commandes sur une bande centralisée (ZB) du système technique de bande centralisée (ZF) et qu'indépendamment du fait, qu'un produit (P) soit à préparer au poste de préparation des commandes des produits à préparer selon la commande (WZMI) ou au poste de préparation des commandes avec le système technique de bande centralisée (ZBF1, ZBF2), le produit (P) est sorti de stock à partir du même lieu de stockage du rayonnage (R1 à R4 ; K1 à K4).

2. Procédé de préparation de commandes selon la revendication 1 **caractérisé en ce que** le système de transport de stock transmet des produits (P) sortis de stock vers des lieux de stockage transitoires (Z) d'un poste de préparation de commandes de produits à préparer selon la commande (MZW1 à MZW3) par l'intermédiaire de canaux de traverse (D), tous les produits (P) à préparer selon la commande sortis du stock d'une commande à préparer étant préparés au niveau du poste de préparation des commandes de produits à préparer selon la commande (MZW1 à MZW3) stockés transitoirement pendant la durée de préparation des commandes au niveau d'un de ces lieux de stockage transitoires Z) du poste de préparation des commandes de produits à préparer selon la commande (MZW1 à MZW3) et étant préparés dans une unité de transport des commandes (A) de la commande à préparer à partir de ces lieux de stockage transitoires (Z) manuellement, respectivement, automatiquement au moyen de robots.

3. Procédé de préparation de commandes selon l'une des revendications précédentes **caractérisé en ce que** des produits (P), d'au moins un type de produit sorti du stock de manière statique, peuvent également être préparés selon la commande au poste de préparation des commandes de produits à préparer selon la commande (WZM1), qui sont stockés transitoirement à la station de préparation de commandes des produits à préparer selon la commande (WZM1) pendant une durée prolongée, en particulier, pendant la préparation des commandes de plusieurs commandes à préparer selon des commandes.

4. Procédé de préparation de commandes selon l'une des revendications précédentes **caractérisé en ce qu'**un automate de bande centralisée (ZA) du poste de préparation des commandes avec le système technique de bande centralisée (ZBF1) est rempli manuellement, respectivement, automatiquement au moyen d'un robot, avec des produits (P) se trouvant dans le lieu de stockage transitoire (Z) du poste de préparation de commandes avec le système technique de bande centralisée (ZBF1), robot avec lequel chaque commande à préparer pilotée par un calculateur de gestion de stock est préparée selon la commande automatiquement sur la bande centralisée (ZB), les produits (P) préparés de chaque commande à préparer étant disposés dans une unité de transport de commandes (A) à l'extrémité de la bande centralisée (ZB).

5. Procédé de préparation de commandes selon l'une des revendications précédentes, **caractérisé en ce qu'**un semi automate de bande centralisée (ZHA) du poste de préparation des commandes avec le système technique de bande centralisée (ZBF2) est rempli manuellement, respectivement, automatiquement au moyen d'un robot, avec des produits (P) se trouvant dans le lieu de stockage transitoire (Z) du poste de préparation de commandes avec le système technique de bande centralisée (ZBF2), à chaque commande, et le produit est ensuite préparé sur la bande centralisée (ZB), les produits (P) préparés de chaque commande à préparer la commande étant disposés dans une unité de transport de commandes (A) à l'extrémité de la bande centralisée (ZB).

6. Procédé de préparation de commandes selon l'une des revendications précédentes, **caractérisé en ce qu'**un calculateur de gestion de stock de l'installation de préparation de commandes (1 ; 2) attribue à chaque produit (P) à stocker un lieu de stockage approprié en fonction des propriétés du produit et du type de préparation de la commande à attendre pour le produit (P), afin de conserver des voies d'entrée et de sortie de stock en peu de nombre, respectivement des temps d'entrée et de sortie de stock faibles, pour le système de transport de stock, et d'augmenter le rendement de la préparation des commandes.

7. Procédé de préparation de commandes selon l'une des revendications précédentes **caractérisé en ce que** les produits (P) sont stockés dans un lieu de stockage sous forme de carrousel (K1 à K4) dans lequel les produits (P) sont emmenés sur une chaîne sans fin de fond de casier (EF) et les produits (P) sortis du stock sont transmis de la chaîne sans fin de fond de casier (EF) soit sur un système de transport (FO), soit sur l'un des canaux de traverse (D) avec le système de transport de stock.

8. Installation de préparation de commandes (1 ; 2) destinée à la préparation de commandes de produits (P), l'installation de préparation de commandes (1 ; 2) présentant au moins un rayonnage (R1 à R4 ; K1 à K4) pour le stockage des produits (P), et un système de transport de stock associé pour sortir et entrer dans le stock les produits (P) et pour le transfert de produits (P) sortis du stock vers un système de transport FO), et un calculateur de gestion de stock pour le pilotage de l'installation de préparation de commandes (1 ; 2), et où se présente un poste de préparation de commandes de produits à préparer selon une commande (WZM1), où le nombre de pièces des produits (P) sortis du stock défini dans une commande à préparer est préparé selon la commande dans une unité de transport de commande (A) en fonction de la commande à préparer, les types de produits correspondant à la commande à préparer étant sortis du stock, les produits (P) restants du type de produits pouvant être préparés les uns après les autres au poste de préparation de commandes de produits à préparer selon la commande (WZM1) et après la préparation des commandes peuvent de nouveau être rentrés dans le stock par l'intermédiaire du système de transport (FO) dans le rayonnage (R1 à R4 ; K1 à K4), **caractérisée en ce que** le rayonnage (R1 à R4 ; K1 à K4) présente au moins un canal de traverse (D) et un lieu de stockage transitoire (Z) d'un poste de préparation de commandes avec un système technique de bande centralisée (ZBF1, ZBF2) d'une installation de préparation de commandes (1 ; 2) localisée sur un côté du rayonnage (R1 à R4 ; K1 à K4) situé en face du système de transport de stock, et que le système de transport de stock est conçu pour transférer des produits (P) sortis de stock vers un lieu de stockage transitoire (Z), dans lequel les produits (P) sortis de stock peuvent être transférés d'un système technique de bande centralisée (ZF) de l'installation de préparation de commandes (1 ; 2) pour la préparation des commandes sur une bande centralisée (ZB) du système technique de bande centralisée (ZF), et que le système de transport de stock est indépendant du fait qu'un produit (P) doit être préparé à partir du poste de préparation de commandes de produits à préparer selon la commande (WZM1) ou du poste de préparation de commandes avec le système technique de bande centralisée (ZBF1, ZBF2), pour la sortie du stock du produit (P) à partir du même lieu de stockage du rayonnage (R1 à R4 ; K1 à K4).

9. Installation de préparation de commandes (1 ; 2) selon la revendication 8 **caractérisée en ce que** le système de transport de stock est conçu pour transférer plus loin des produits (P) sortis de stock dans des lieux de stockage transitoires (Z) d'un poste de préparation de commandes de produits à préparer selon une commande (MZW1 à MZW3) situé sur le côté d'un rayonnage (R1 à R4) se situant en face du système de transport de stock, où, dans la zone (B) du poste de préparation de commandes de produits à préparer selon une commande (MZW1 à MZW3), un lieu de stockage transitoire (Z) est prévu pour chaque type de produit d'une commande de préparation à préparer, parmi lesquels les produits (P) sortis du stock manuellement peuvent être préparés pour chaque commande de préparation dans une unité de transport de la commande (A).

10. Installation de préparation de commande (1 ; 2) selon l'une des revendications 8 ou 9, **caractérisée en ce que** les canaux de traverse (D) et les lieux de stockage transitoires (Z) du poste de préparation de commandes avec le système technique de bande centralisée (ZBF1, ZBF2), respectivement du poste de préparation de commandes de produits à préparer selon la commande (MZW1 à MZW3), sous conçus par des plans de rayonnage proches du sol pour au moins un rayonnage (R1 à R4 ; K1 à K4).

11. Installation de préparation de commandes (1) selon la revendication 10, **caractérisée en ce qu'**au moins deux rayonnages (R1, R4), disposés parallèlement, constituent un stockage par des rayonnages en hauteur (H1 à H6), et que les canaux de traverse (D) et les lieux de stockage transitoires (Z) du poste de préparation de commandes avec le système technique de bande centralisée (ZBF1, ZBF2) sont prévus dans un premier rayonnage (R1) externe délimitant le stockage par le rayonnage de stockage en hauteur (H1 à H6), et que les canaux de traverse (D) et les lieux de stockage transitoires (Z) de la station de préparation de commandes de produits à préparer selon la commande (MZW1 à MZW3) sont prévus sur un deuxième rayonnage externe (R4) délimitant le stockage par des rayonnages en hauteur (H1 à H6).

12. Installation de préparation de commandes (1) selon l'une des revendications 8 à 11, **caractérisée en ce qu'**au moins deux rayonnage (R1 à R4) forment une voie de passage (F1, F2) comportant au moins deux plans de rayonnage, dans lesquels, par plan de rayonnage, un appareil d'emploi des plans du système de transport est prévu, qui est conçu pour l'entrée et la sortie de stock de produits (P) dans les lieux de stockage des rayonnages (R1 à R4) et pour le dépôt de produits (P) sortis du stock sur le monte-charges (L1 à L4) du système de transport (FO), qui transporte les produits (P) sortis du stock sur un plan de bande transporteuse.

13. Installation de préparation de commandes (1) selon l'une des revendications 8 à 12, **caractérisée en ce qu'**au poste de préparation de commandes de produits à préparer selon la commande (WZM1), et/ou au poste de préparation de commandes de produits à préparer selon la commande (MZW1 à MZW3), un robot piloté par le calculateur de gestion du stock est prévu, qui est conçu pour la préparation des commandes des produits (P) sortis du stock et/ou qu'au poste de préparation de commandes avec le système technique de bande centralisée (MZW1 à MZW3), un robot piloté par le calculateur de gestion du stock est prévu, qui est conçu pour la préparation de commandes de produits (P) sortis du stock dans un semi automate de bande centralisée (ZHA) et/ou lors du remplissage d'un automate de bande centralisée (ZA) avec des produits (P) sortis de stock.
